# EUROPEAN PATENT APPLICATION

(11) **EP 3 301 558 A1**
(43) Date of publication of application: **04.04.2018**
(21) Application number: 17173514.5
(22) Date of filing: 30.05.2017
(51) Int. Cl.: G06F 3/0484, G06F 3/0486, H04M 1/725

(54) **METHOD AND DEVICE FOR SHARING CONTENT**

(30) Priority: 29.09.2016 CN 201610865379
(71) Applicant: Beijing Xiaomi Mobile Software Co., Ltd., Beijing 100085 (CN)
(72) Inventor: ZHU, Yin, BEIJING, 100085 (CN); LU, Zhenzhou, BEIJING, 100085 (CN)
(74) Representative: Delumeau, François Guy

(57) **Abstract**

The present invention relates to a method and a device for sharing content, belonging to mobile internet technology field. In technical solutions of the present invention, a content page specified to open by a user is displayed (101); the operation signal of the user for triggering content sharing is obtained in the currently displayed page, the content sharing mode is entered (102); the content element selected by the user from the currently displayed page is obtained, and the content element is shared (103).

## Description

### TECHNICAL FIELD

The present invention relates to mobile internet technology field, and more particularly, to a method and a device for sharing content.

### BACKGROUND

With the fast development of the mobile internet technology, especially appearance of social media, users may forward and share content whenever and wherever by a social media platform. For instance, for a browsed web page, a user may realize overall sharing of the web page by forwarding a link address corresponding to the web page. However, in some scenarios, the user may only want to forward and share a paragraph of text, a picture, a video clip or other part of the content in the web page. For these scenarios, the present invention provides a new and more flexible solution for sharing content.

### SUMMARY

According to a first aspect of embodiments of the present invention, a method for sharing content is provided, which is applied in an electronic apparatus and comprises:
displaying a content page specified to open by a user;
in the currently displayed page, obtaining an operation signal of the user for triggering content sharing, and entering a content sharing mode; and
obtaining a content element selected by the user from the currently displayed page, and sharing the content element.

In an embodiment, obtaining an operation signal of the user for triggering content sharing and entering a content sharing mode comprises:
detecting an operation gesture input by the user in the currently displayed page;
when the detected operation gesture is a preset operation gesture, obtaining the operation signal of the user for triggering content sharing, and entering the content sharing mode, wherein, the preset operation gesture is an operation gesture for triggering the currently displayed page to be displayed as contracting inward from four corners of a display screen.

In an embodiment, obtaining a content element selected by the user from the currently displayed page comprises:
extracting and highlighting the content element selected by the user from the currently displayed page;
or,
extracting and editing the content element selected by the user from the currently displayed page, and highlighting the edited content element.

In an embodiment, sharing the content element comprises:
displaying icons of applications installed in the electronic apparatus for the user to share content; and
dragging the content element to a displayed icon of the application to realize sharing the content element.

In an embodiment, the content element comprises at least one of text content, a picture, a link address, an audio and a video.

In an embodiment, dragging the content element to a displayed icon of an application to realize sharing the content element comprises:
detecting a dragging operation to the content element;
if the dragging operation to the content element is detected, dynamically displaying the content element according to the dragging operation;
when detecting the content element is moved to an icon of a target application in the displayed icons of the applications, sharing the content element in the target application, wherein, the target application comprises a communication application or a text editing application.

In an embodiment, when detecting the content element is moved to an icon of a target application in the displayed icons of the applications, sharing the content element in the target application comprises:
when detecting the content element is moved to the icon of the target application in the displayed icons of the applications, opening the target application;
when the target application is the communication application, selecting a contact to share from the target application, and sharing the content element to the contact;
when the target application is the text editing application, inserting the content element to a target editing page of the text editing application.

According to a second aspect of embodiments of the present invention, a device for sharing content is provided, which is applied in an electronic apparatus and comprises:
a content displaying module, configured to display a content page specified to open by a user;
a processing module, configured to obtain an operation signal of the user for triggering content sharing in the currently displayed page, and to enter a content sharing mode; and
a content sharing module, configured to obtain a content element selected by the user from the currently displayed page, and to share the content element.

In an embodiment, the processing module comprises:
a gesture detecting sub module, configured to detect an operation gesture input by the user in the currently displayed page;
a mode switching sub module, configured to obtain the operation signal of the user for triggering content sharing, and to enter the content sharing mode, when the detected operation gesture is a preset operation gesture, wherein, the preset operation gesture is an operation gesture for triggering the currently displayed page to be displayed as contracting inward from four corners of a display screen.

In an embodiment, the content sharing module comprises:
a first processing sub module, configured to extract and highlight the content element selected by the user from the currently displayed page;
or,
a second processing sub module, configured to extract and edit the content element selected by the user from the currently displayed page, and to highlight the edited content element.

In an embodiment, the content sharing module comprises:
an information displaying sub module, configured to display icons of applications installed in the electronic apparatus for the user to share content;
a content sharing sub module, configured to drag the content element to a displayed icon of an application to realize sharing the content element.

In an embodiment, the content element includes at least one of text content, a picture, a link address, an audio and a video.

In an embodiment, the content sharing sub module comprises:
a detecting unit, configured to detect a dragging operation to the content element;
a controlling unit, configured to dynamically display the content element according to the dragging operation, if the dragging operation to the content element is detected;
a content sharing unit, configured to share the content element in the target application, when detecting the content element is moved to an icon of a target application in the displayed icons of the applications, wherein, the target application comprises a communication application or a text editing application.

In an embodiment, the content sharing unit comprises:
a first sharing sub unit, configured to open the target application, when detecting the content element is moved to the icon of the target application in the displayed icons of the applications;
a second sharing sub unit, configured to select a contact to share from the target application, and to share the content element to the contact, when the target application is the communication application;
a third sharing sub unit, configured to insert the content element to a target editing page of the text editing application, when the target application is the text editing application.

According to a third aspect of embodiments of the present invention, a device for sharing content is provided and comprises:
a processor;
a memory for storing instructions executable by the processor;

in which the processor is configured to perform the method according to the first aspect of embodiments of the present invention.

In a particular embodiment, the steps of the method for sharing content are determined by computer program instructions.

Consequently, according to a fourth aspect, the present invention is also directed to a computer program for executing the steps of the method for sharing content as described above when this program is executed by a computer.

This program can use any programming language and take the form of source code, object code or a code intermediate between source code and object code, such as a partially compiled form, or any other desirable form.

The present invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in embodiments of the present invention may have following advantageous effects.

In technical solutions of the present invention, the operation signal of the user for triggering content sharing is obtained in the currently displayed page, the content sharing mode is entered, the content element selected by the user from the currently displayed page is obtained, and the content element is shared. By the operation signal for triggering content sharing, triggering to enter the content sharing mode in the currently displayed page, the user may freely select and share the content element in the currently displayed page under the content sharing mode.

It is to be understood that both the foregoing general description and the following detailed description are exemplary and explanatory only and are not restrictive of the present invention.

### BRIEF DESCRIPTION OF THE DRAWINGS

Accompanying drawings herein are incorporated in and constitute a part of the specification, and illustrate exemplary embodiments in line with the present invention, and serve to explain the principle of the present invention together with the description.
Fig. 1 is a flow chart of a method for sharing content according to an exemplary embodiment of the present invention.
Fig. 2 is a flow chart of a method for sharing content according to an exemplary embodiment of the present invention.
Fig. 3A is a schematic diagram illustrating a display interface of a web page according to an exemplary embodiment of the present invention.
Fig. 3B is a schematic diagram illustrating a user triggering a currently displayed page to enter a content sharing mode according to an exemplary embodiment of the present invention.
Figs. 4A to 4C are schematic diagrams illustrating an operation of dragging a content element to a target application in displayed applications to share according to an exemplary embodiment of the present invention.
Figs. 5A to 5E are schematic diagrams illustrating an implementation procedure of a content element shared in a contact session page according to an exemplary embodiment of the present invention.
Figs. 6A to 6D are schematic diagrams illustrating an implementation procedure of a content element shared in call records according to an exemplary embodiment of the present invention.
Figs. 7A to 7C are schematic diagrams illustrating an implementation procedure of a content element shared in a memo according to an exemplary embodiment of the present invention.
Fig. 8 is a block diagram of a device for sharing content according to an exemplary embodiment of the present invention.
Fig. 9 is a block diagram of a device for sharing content according to an exemplary embodiment of the present invention.
Fig. 10 is a block diagram of a device for sharing content according to an exemplary embodiment of the present invention.

Specific embodiments of the present invention have been shown in the above drawings. Hereinafter, the description with more details will be given. The drawings and text description are not to limit the scope of ideas of the present invention by any way, but by reference to specific embodiments, the concept of the present invention is explained to a skilled in the art.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Terms used herein in the description of the present invention are only for the purpose of describing specific embodiments, but should not be construed to limit the present invention. As used in the description of the present invention and the appended claims, "a" and "the" in singular forms mean including plural forms, unless clearly indicated in the context otherwise. It should also be understood that, as used herein, the term "and/or" represents and contains any one and all possible combinations of one or more associated listed items.

It is to be understood that, although terms such as "first" and "second" are used herein for describing various elements, these elements should not be limited by these terms. These terms are only used for distinguishing one element from another element. For example, a first sequencing criterion may also be called a second sequencing criterion, and similarly, the second sequencing criterion may also be called the first sequencing criterion, without departing from the scope of the present invention. Depending on the context, the term "if" used herein may be understood to mean "when" or "upon" or "in response to the determination of".

The technical solutions provided in embodiments of the present invention are applied in an electronic apparatus. The electronic apparatus may be various kinds of terminals that are capable of performing touch operation by a touch screen, such as a smart phone, a tablet computer, a personal digital assistant (PDA for short) or other touch screen terminal with a processor and a display and output device.

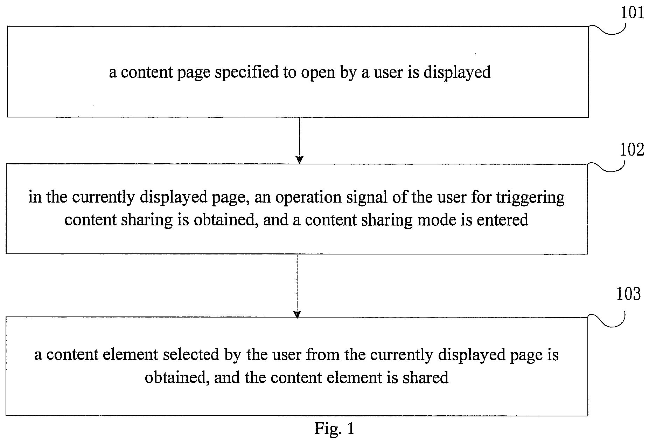

Fig. 1 is a flow chart of a method for sharing content according to an exemplary embodiment of the present invention. The method for sharing content is applied in an electronic apparatus with a touch screen. The method for sharing content may include following blocks.

In block 101, a content page specified to open by a user is displayed.

In this embodiment, the content page may include a web page, an instant chat session page, a video playing page, a music playing page, or a page for displaying locally stored information, which are specified to open (or opened) by the user.

In block 102, in the currently displayed page, an operation signal of (or from) the user for triggering content sharing is obtained, and a content sharing mode is entered.

In this embodiment, obtaining an operation signal of the user for triggering content sharing, and entering a content sharing mode may include: detecting an operation gesture input by the user in the currently displayed page; and when the detected operation gesture is a preset operation gesture, obtaining the operation signal of the user for triggering content sharing (i.e. the detected operation gesture is determined as the operation signal of the user for triggering content sharing), and entering the content sharing mode.

The preset operation gesture may be an operation gesture for triggering the currently displayed page to be displayed as contracting inward from four corners of a display screen.

In this embodiment, under the content sharing mode, the content elements in the currently displayed page are all in an editable state. For example, the user may perform operations such as clicking to select, clicking to view, copy and paste to a content element in the currently displayed page, and entrances (e.g. in the form of icons, etc.) of applications for sharing content with other persons or objects on a network (e.g. Internet, local area network, etc.) may be provided to the user in the currently displayed page. So the user may select the content element in the currently displayed page, and then share the selected content element on the network by the displayed sharing entrances.

In block 103, a content element selected by the user from the currently displayed page is obtained, and the content element is shared.

In this embodiment, sharing the content element includes: displaying icons of applications installed in the electronic apparatus for the user to share content; and dragging the content element to a displayed icon of an application to realize sharing the content element.

The content element may include at least one of text content, a picture, a link address, an audio and a video.

In an embodiment, dragging the content element to a displayed icon of an application to realize sharing the content element includes: detecting a dragging operation to the content element; if the dragging operation to the content element is detected, dynamically displaying the content element according to the dragging operation; when detecting the content element is moved (or dragged) to an icon of a target application in the displayed icons of the applications, sharing the content element in (or via) the target application.

The target application includes a communication application or a text editing application.

In an embodiment, when detecting the content element is moved to an icon of a target application in the displayed icons of the applications, sharing the content element in the target application includes: when detecting the content element is moved to the icon of the target application in the displayed icons of the applications, opening the target application; when the target application is the communication application, selecting a contact to share from the target application, and sharing the content element with the contact; when the target application is the text editing application, inserting the content element to a target editing page of the text editing application.

In summary, in technical solutions of the present invention, the operation signal of the user for triggering content sharing is obtained in the currently displayed page, the content sharing mode is entered, the content element selected by the user from the currently displayed page is obtained, and the content element is shared. By the operation signal for triggering content sharing, triggering to enter the content sharing mode in the currently displayed page, the user may freely select and share the content element in the currently displayed page under the content sharing mode. Thus the invention provides a more flexible solution for sharing content.

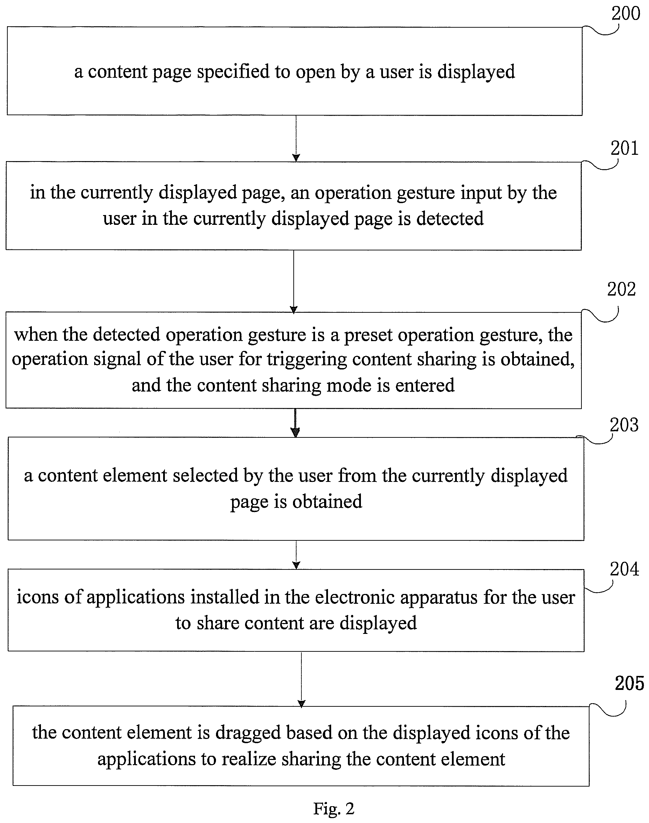

Referring to Fig. 2, Fig. 2 is a flow chart of a method for sharing content according to an exemplary embodiment of the present invention. The method is applied to the above electronic apparatus, and may include following blocks.

In block 200, a content page specified to open by a user is displayed.

In this embodiment, the content page may include a web page, an instant chat session page, a video playing page, a music playing page, or a page for displaying locally stored information, which are specified to open by the user. The page for displaying locally stored information may include a contact list page, a call records page, or a picture library, etc.

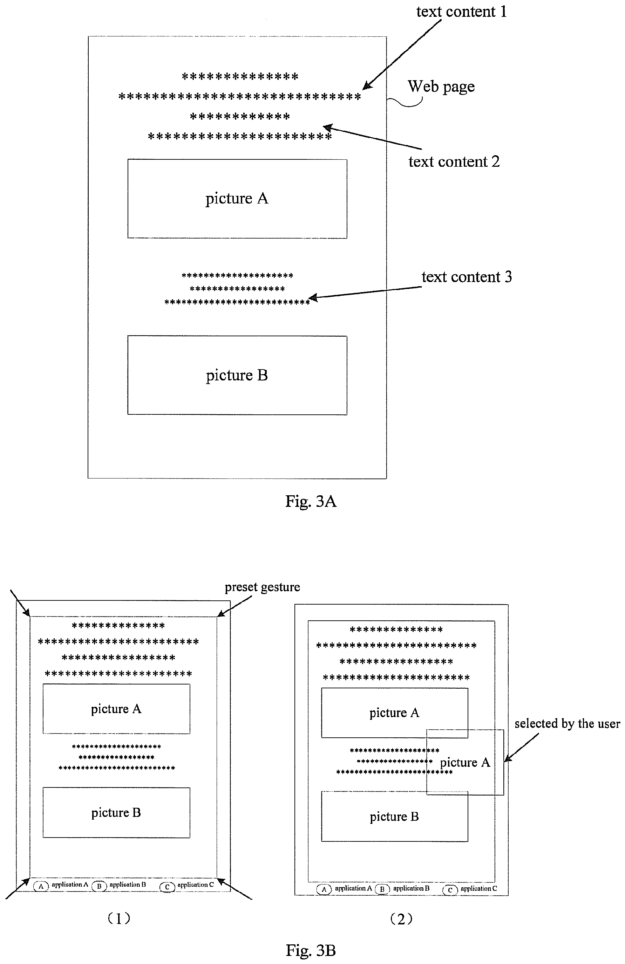

The web page is taken as an example of the content page specified to open by the user in this embodiment for illustrating. As shown in Fig. 3A, an interface of a web page is exemplarily given, which includes text content 1, text content 2, text content 3, a picture A and a picture B.

In block 201, in the currently displayed page, an operation gesture input by the user in the currently displayed page is detected.

Implementation principles of touch screen technology are briefly introduced here. A touch screen includes a touch detecting assembly and a touch screen controller, in which the touch detecting assembly is mounted in the front of a display screen, configured to detect a touch position of the user (when human body touches the touch screen similar to an electrostatic induction sheet, a current induction signal may be generated, and the touch detecting assembly may know a touch point of the user by sensing the current induction signal), then related touch information is transferred to the touch screen controller. When receiving the touch information transferred from the touch detecting assembly, the touch screen controller converts the touch information into a coordinate of the touch point, and transfers the coordinate of the touch point to a CPU (Central Processing Unit) to process. Meanwhile, the touch screen controller may also receive and execute instructions sent from the CPU.

Based on the above implementation principles of touch screen technology, when a touch operation is performed by the user on the touch screen of the electronic apparatus, the electronic apparatus may detect the operation gesture of the user based on changes of the current induction signals of the touch screen.

In block 202, when the detected operation gesture is a preset operation gesture, the operation signal of the user for triggering content sharing is obtained, and the content sharing mode is entered.

In an embodiment, the user may preset an operation gesture for triggering to enter the content sharing mode according to his own habits. An operating system records this operation gesture. The preset operation gesture may be a preset sliding trace or an operation gesture for triggering a certain operation.

In this embodiment, the preset operation gesture may be an operation gesture for triggering the currently displayed page to be displayed as contracting inward from four corners of the display screen.

When the operation signal of the user for triggering content sharing is obtained, the content sharing mode is triggered to enter, and the user may select and share the content element in the currently displayed page under the content sharing mode. The content element for the user to select may include at least one of text content, a picture, a link address, an audio and a video. For example, the user may click a content element that is laid out based on a page layout in the currently displayed page, such as a certain picture, a certain paragraph of text, a video or a link address in the currently displayed page.

In block 203, a content element selected by the user from the currently displayed page is obtained.

In this embodiment, the content element selected by the user from the currently displayed page is determined based on the selecting operation of the user, and the content element selected by the user is processed, which include: extracting and highlighting the content element selected by the user from the currently displayed page; or extracting and editing the content element selected by the user from the currently displayed page, and highlighting the edited content element.

Referring to Fig. 3B, a schematic diagram illustrating a user triggering the currently displayed page to enter a content sharing mode is exemplarily given. As shown in Fig. 3B (1), when detecting the operation gesture of the user for triggering the currently displayed page to be displayed as contracting inward from four corners of the display screen, the currently displayed page is triggered, such as the displayed page in Fig. 3A is triggered to be displayed as contracting inward from four corners of the display screen, and then the content sharing mode is entered. As shown in Fig. 3B (2), the content element selected by the user from the currently displayed page (the picture A selected by the user) is extracted and highlighted, so as to perform sharing operation to the content element selected (the picture A). Under the content sharing mode, the icons of the applications for the user to share are displayed in a bottom region of the display screen of the electronic apparatus, such as the application A, the application B and the application C shown in Fig. 3B (1) and Fig. 3B (2).

In an embodiment, before sharing the content element selected by the user, the content element selected by the user may be edited. For example, when the content element is a picture, the displaying size, layout and other displaying state of the selected picture may be edited. When the content element is text content, a reediting operation may be performed to the text content, such as adding text description, deleting some words, or changing font style, font size or font color etc. For example, the picture A selected by the user in Fig. 3B (2) may be cut to obtain a picture A whose size meets requirement of the user, and then, the picture A after cut is shared.

In block 204, icons of applications installed in the electronic apparatus for the user to share content are displayed.

In this embodiment, after obtaining the operation signal of the user for triggering content sharing, the content sharing mode is triggered to enter. Under the content sharing mode, the currently displayed page may be displayed as contracting inward from four corners of the display screen by a preset scale, and the icons of the applications installed in the electronic apparatus for the user to share content are displayed at the bottom of the display screen, as shown in Fig.3B (1) and Fig. 3B (2).

In an embodiment, types of applications installed in the electronic apparatus are detected. Under the content sharing mode, icons of applications that satisfy a preset type condition in the applications installed in the electronic apparatus are arranged and displayed in order in a preset region of the display screen (such as the bottom region of the electronic display screen). The applications that satisfy the preset type condition are applications in which the sharing operation may be performed to the content element. For example, communication applications or text edit applications installed in the electronic apparatus may be satisfied.

Displaying icons of applications installed in the electronic apparatus for the user to share content may mean follows. The icons are displayed in an order according to installation time of the applications that satisfy the preset type condition, for example, applications with earlier installation time than other applications of the applications installed in the electronic apparatus may be arranged to be displayed first. Or the icons may be displayed in an order according to using times or using frequency of the applications that satisfy the preset type condition, for example, applications with more usage times or with higher usage frequency than other applications of the applications installed in the electronic apparatus may be arranged to be displayed first.

In block 205, the content element is dragged to a displayed icon of an application to realize sharing the content element.

In an embodiment, under the content sharing mode, after displaying the icons of the applications for the user to share content, the user may realize sharing the content element by an operation of dragging the selected content element.

In this embodiment, dragging the content element to a displayed icon of an application to realize sharing the content element includes: detecting a dragging operation to the content element; if the dragging operation to the content element is detected, dynamically displaying the content element according to the dragging operation; when detecting the content element is moved (or dragged) to an icon of a target application in the displayed icons of the applications, sharing the content element in the target application.

The target application may include but be not limited to a communication application or a text editing application.

The text editing application may be an office application software such as Word and PPT, or an editing software for a memo, a note and the like. The communication application may be an instant messaging application, a SMS (Short Messaging Service), a telephone application, or a communication tool such as social networking service (SNS for short) application software.

In this embodiment, when detecting the content element is moved to an icon of a target application in the displayed icons of the applications, sharing the content element in the target application includes: when detecting the content element is moved to the icon of the target application in the displayed icons of the applications, opening the target application; when the target application is the communication application, selecting a contact to share from the target application, and sharing the content element to the contact; when the target application is the text editing application, inserting the content element to a target editing page of the text editing application.

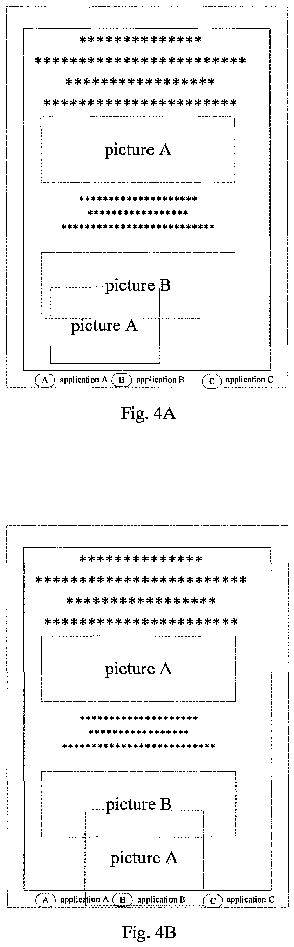

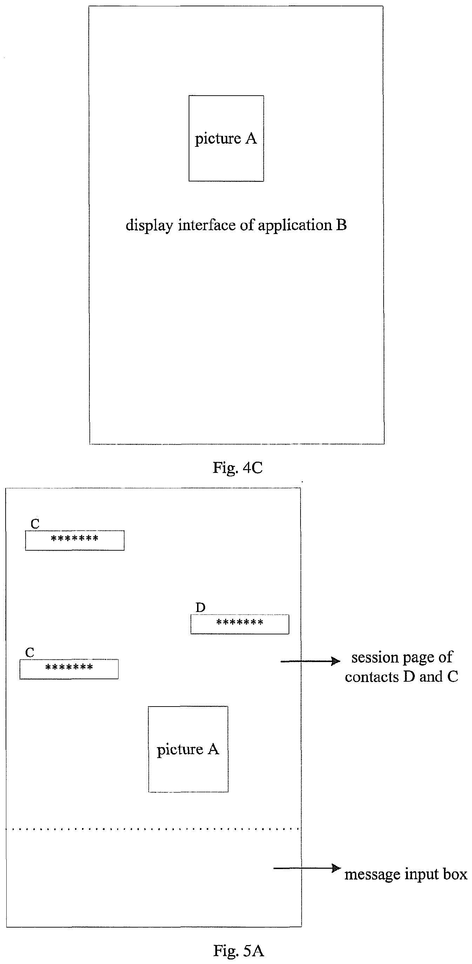

Referring to Fig. 4A to Fig. 4C, schematic diagrams illustrating an operation of dragging a content element to a target application in displayed applications to share are exemplarily given. As shown in Fig. 4A, when detecting the dragging operation to the content element from the user, the content element (such as the picture A) is displayed dynamically according to the dragging operation. When the content element is moved to the icon of the target application in the displayed icons of the applications, the target application is opened, as shown in Fig. 4B and Fig. 4C. And then, the user may perform a sharing operation to the content element in the opened target application.

In an embodiment, if the target application is a communication application, the user may select a contact to share in a contact session page, a contact list page, or a call records page of the communication application, and share the content element to the selected contact.

In an embodiment, sharing the content element with a contact of the communication application may include: opening the contact session page of the communication application, and sending the content element to a contact of the contact session page; or opening the contact list page of the communication application, selecting a contact from the contacts, and sending the content element to the selected contact; or opening the call records page of the communication application, selecting a contact from the call records page, and sending the content element to the selected contact.

In an embodiment, sharing the content element with a contact of the communication application may further include: dragging the content element to a contact session page, a contact list page, or a call records page of the opened target application, further dragging the content element to a preset position of the contact session page, the contact list page, or the call records page, and sending the content element to a contact corresponding to the preset position. In this example, sending the content element (e.g. the picture A) to a contact of the communication application refers to sending an original picture of the content element to the contact of the communication application.

In an embodiment, the preset position may be a message input box area of the contact session page, an entry position of a contact in the contact list page, or an entry position of a call record in the call records page.

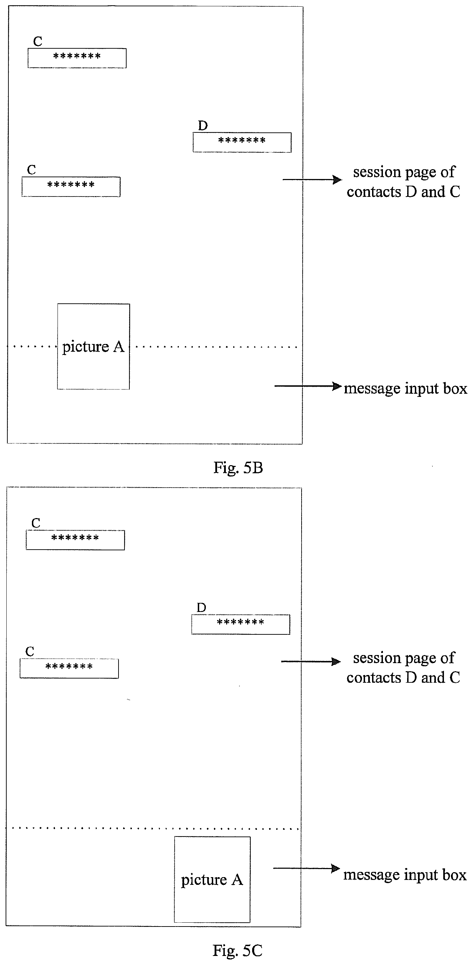

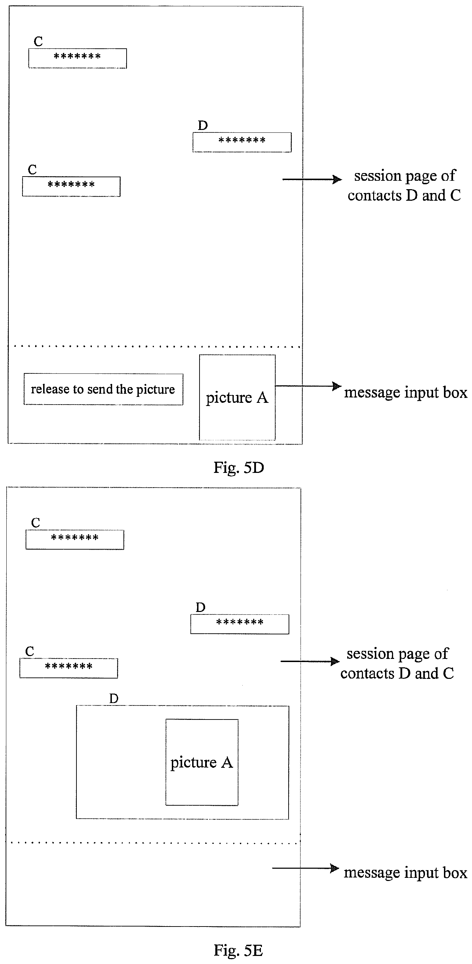

For example, in an embodiment, if a contact session page of the communication application is opened, when detecting the content element is moved to the message input box of the contact session page of the communication application, the content element may be send to a contact of the current session. Fig. 5A to Fig. 5E all are schematic diagrams illustrating an implementation procedure of a content element shared in a contact session page according to an exemplary embodiment of the present invention. The content element is dragged to a display interface of the opened target application B, in which the display interface of the application B is a contact session page, and the content element (such as the picture A) is still displayed in the contact session page, as shown in Fig. 5A. After detecting the dragging operation to the content element from the user, the content element is moved in the current display interface according the dragging operation, process of which may refer to Fig. 5B. When the content element is dragged to the message input box of the contact session page, if detecting that the user releases the dragging operation to the content element, the content element is input to the message input box, referring to Fig. 5C. If detecting a request to send the content element in the message input box, the content element may be sent to a contact of the current session, referring to Fig. 5E, realizing an operation of sharing the content element to the contact. In an embodiment, before sharing the content element to the contact, the user is informed to perform a picture sharing operation, as shown in Fig. 5D, words of "release to send the picture" is informed to the user, to inform the user that releasing the dragging operation to the content element may realize a sending operation of the content element.

In an embodiment, implement process of the above Fig. 5A to Fig. 5E may be simplified. When detecting the content element is dragged to the message input box of the contact session page, the user is directly informed whether to send the picture, such as "release to send the picture". When detecting the user releasing the dragging operation to the content element, the content element is directly sent to the contact of the current session.

For example, in an embodiment, if a contact list page of the communication application is opened, when detecting the content element is dragged to an entry position of a contact in the contact list page, the content element is sent to the contact. In an embodiment, if a call records page of the communication application is opened, when detecting the content element is dragged to an entry position of a call record in the call records page, the content element is sent to a contact corresponding to the call record.

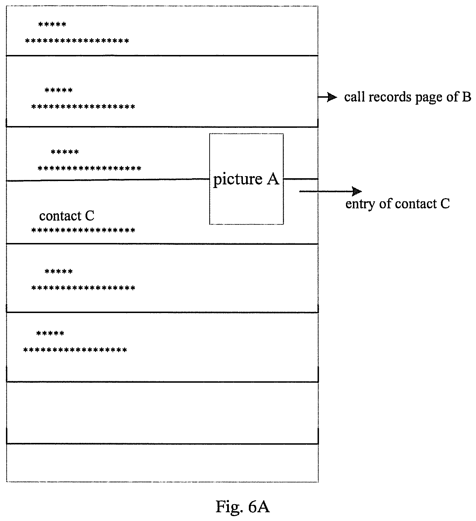

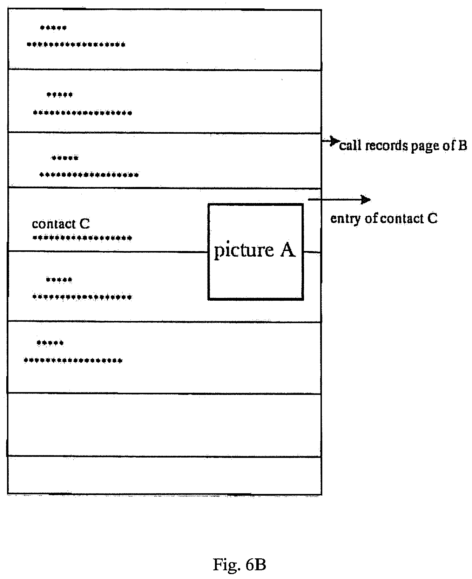

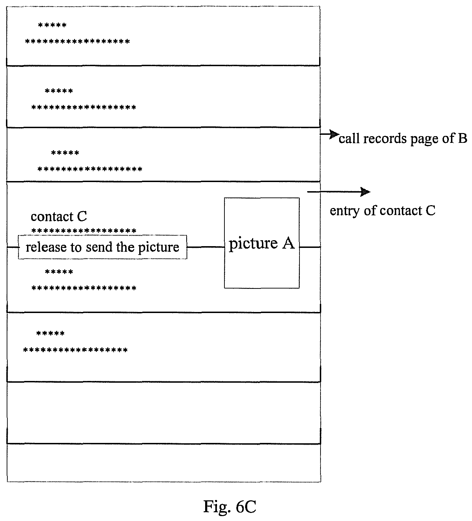

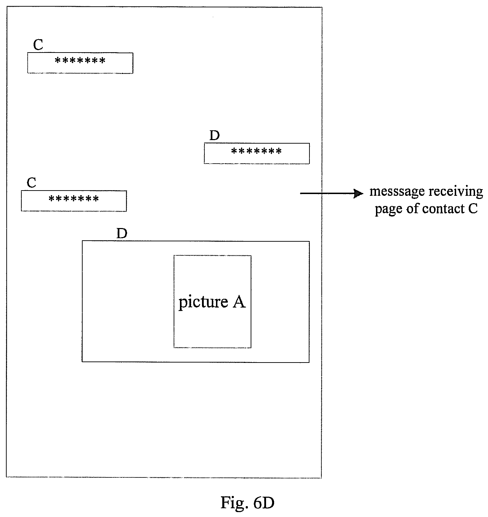

Fig. 6A to Fig. 6D all are schematic diagrams illustrating an implementation procedure of a content element shared in call records according to an exemplary embodiment of the present invention. The content element is dragged to the target application B, and then the target application B is opened, in which a display interface of the application B is a call records page, and the content element is still displayed in the call records page, as shown in Fig. 6A. After detecting the dragging operation to the content element from the user, the content element is moved in the current display interface according the dragging operation, process of which may refer to Fig. 6B. When the content element is dragged to an entry of a contact in the contact list page, if detecting the user releases the dragging operation to the content element, the content element is sent to a contact corresponding to the call record, referring to Fig. 6D, realizing an operation of sharing the content element to the contact. In an embodiment, before sharing the content element to the contact, the user is informed to perform a picture sharing operation, as shown in Fig. 6C, words of "release to send the picture" is informed to the user, to inform the user that releasing the dragging operation to the content element may realize a sending operation of the content element.

In an embodiment, implement process of the above Fig. 6A to Fig. 6D may be simplified. When detecting the content element is dragged to the entry of a call record in the call records page, the user is directly informed whether to send the picture, such as "release to send the picture". When detecting the user releasing the dragging operation to the content element, the content element is directly sent to the contact corresponding to the call record.

When the target application is other communication applications, the way of sending the content element to a contact of the communication applications is similar to the above that in the message session page or in the call records page, which should not be described in detail herein.

In an embodiment, when the target application is a text editing application, after opening the text editing application, the content element may be inserted to a target position of the text editing application by dragging the content element, realizing sharing the content element.

In an embodiment, when the target application is a text editing application, inserting the content element to a target editing page of the text editing application may be follows. When the target editing page is a memo editing page, if detecting the content element is dragged to a text row of the memo editing page, the content element is inserted to the text row of the memo editing page. Or, when the target editing page is an office editing software, if detecting the content element is dragged to a position of a text editing page, the content element is inserted to the position.

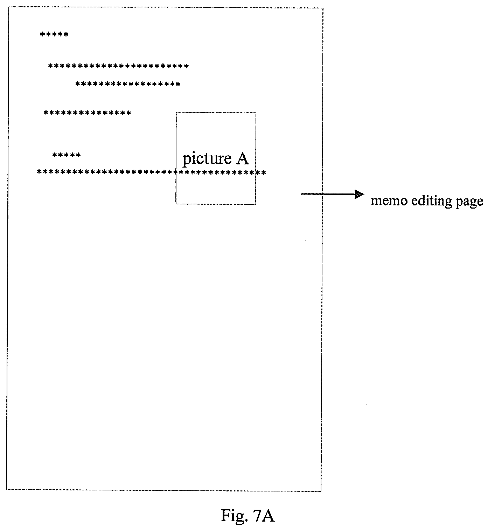

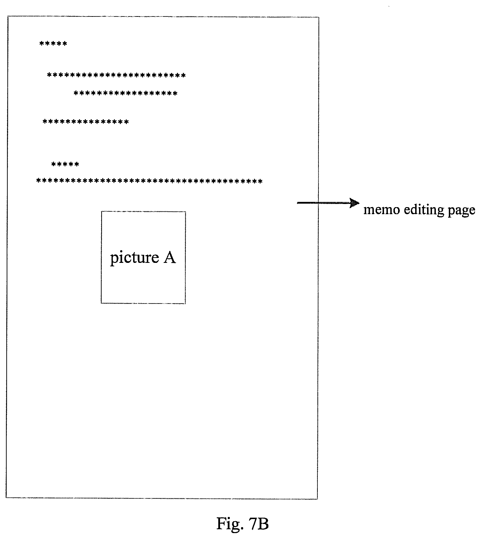

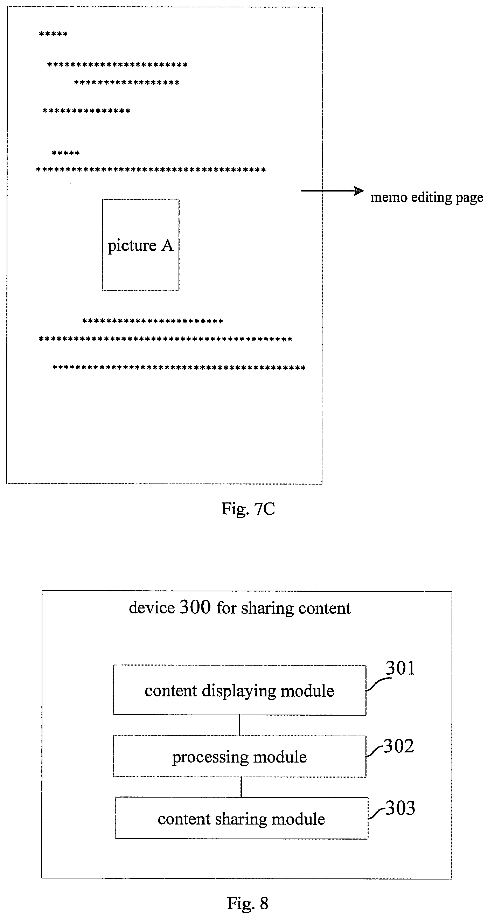

Fig. 7A to Fig. 7C all are schematic diagrams illustrating an implementation procedure of a content element shared in a memo according to an exemplary embodiment of the present invention. The content element is dragged to a display interface of the opened target application B, in which the display interface of the application B is a memo editing page, and the content element is still displayed in the memo editing page, as shown in Fig. 7A. After detecting the dragging operation to the content element from the user, the content element is moved in the current display interface according the dragging operation, process of which may refer to Fig. 7B. When the content element is dragged to a row of the memo editing page, if detecting the user releases the dragging operation to the content element, the content element is inserted to the row of the memo editing page, referring to Fig. 7C, realizing an operation of sharing the content element.

When the target application is other text editing applications, the way of inserting the content element to the text editing page is similar to the above that inserting the content element to the memo editing page, which should not be described in detail herein.

In an embodiment, before performing a sharing operation to the content element, the method further includes: informing the user whether to share the content element, so as to avoid the accidentally touching operation.

Above exemplary descriptions are in the case that the content element selected to share by the user is a picture. When the content element selected to share by the user is text content, a video, an audio, or a link address, it is similar to above exemplary descriptions, which should not be described in detail.

In summary, in technical solution of the present invention, the operation signal of the user for triggering content sharing is obtained in the currently displayed page, the content sharing mode is entered, the content element selected by the user from the currently displayed page is obtained, and the content element is shared. By the operation signal for triggering content sharing, triggering to enter the content sharing mode in the currently displayed page, the user may freely select and share the content element in the currently displayed page under the content sharing mode.

Followings are device embodiments of the present invention, which may be used to execute the method embodiments of the present invention. Please refer to the method embodiments for the details not disclosed in the device embodiments.

Fig. 8 is a block diagram of a device 300 for sharing content according to an exemplary embodiment of the present invention. The device 300 for sharing content is applied in an electronic apparatus with a touch screen. The device 300 for sharing content may include a content displaying module 301, a processing module 302 and a content sharing module 303.

The content displaying module 301 is configured to display a content page specified to open by a user.

The processing module 302 is configured to obtain an operation signal of the user for triggering content sharing in the currently displayed page, and to enter a content sharing mode.

The content sharing module 303 is configured to obtain a content element selected by the user from the currently displayed page, and to share the content element.

In summary, in technical solutions of the present invention, the operation signal of the user for triggering content sharing is obtained in the currently displayed page, the content sharing mode is entered, the content element selected by the user from the currently displayed page is obtained, and the content element is shared. By the operation signal for triggering content sharing, triggering to enter the content sharing mode in the currently displayed page, the user may freely select and share the content element in the currently displayed page under the content sharing mode.

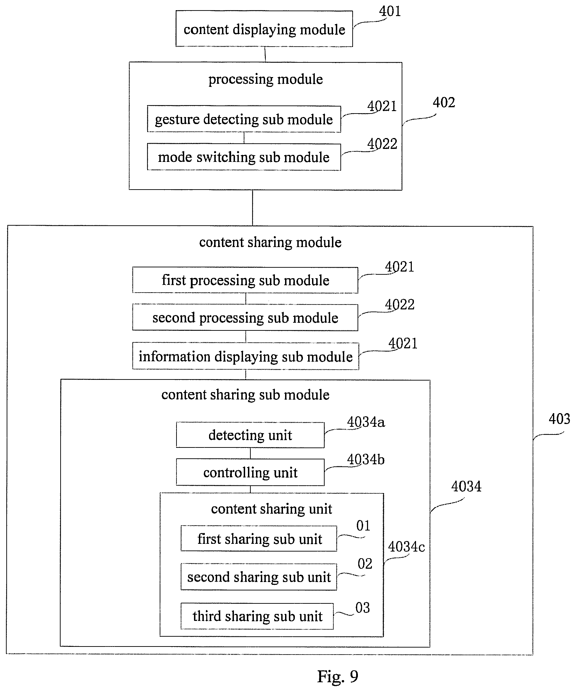

Fig. 9 is a block diagram of a device for sharing content according to another exemplary embodiment of the present invention. The device for sharing content is applied in an electronic apparatus with a touch screen. The device for sharing content may include: a content displaying module 401, a processing module 402, and a content sharing module 403.

The content displaying module 401 is configured to display a content page specified to open by a user.

In this embodiment, the content page may include a web page, an instant chat session page, a video playing page, a music playing page, a music playing page, or a page for displaying locally stored information, which are specified to open by the user.

The processing module 402 is configured to obtain an operation signal of the user for triggering content sharing in the currently displayed page, and to enter a content sharing mode.

The processing module 402 may include a gesture detecting sub module 4021 and a mode switching sub module 4022.

The gesture detecting sub module 4021 is configured to detect an operation gesture input by the user in the currently displayed page.

The mode switching sub module 4022 is configured to obtain the operation signal of the user for triggering content sharing, and to enter the content sharing mode, when the detected operation gesture is a preset operation gesture.

The preset operation gesture may be an operation gesture for triggering the currently displayed page to be displayed as contracting inward from four corners of a display screen.

The content sharing module 403 is configured to obtain a content element selected by the user from the currently displayed page, and to share the content element.

In an embodiment, the content sharing module 403 may include a first processing sub module 4031 or a second processing sub module 4032.

The first processing sub module 4031 is configured to extract and highlight the content element selected by the user from the currently displayed page.

Or,
The second processing sub module 4032 is configured to extract and edit the content element selected by the user from the currently displayed page, and to highlight the edited content element.

In an embodiment, the content sharing module 403 may further include an information displaying sub module 4033, and a content sharing sub module 4034.

The information displaying sub module 4033 is configured to display icons of applications installed in the electronic apparatus for the user to share content.

The content sharing sub module 4034 is configured to drag the content element to a displayed icon of an application to realize sharing the content element.

The content element may include at least one of text content, a picture, a link address, an audio and a video.

In this embodiment, the content sharing sub module 4034 may include a detecting unit 4034a, a controlling unit 4034b, and a content sharing unit 4034c.

The detecting unit 4034a is configured to detect a dragging operation to the content element.

The controlling unit 4034b is configured to dynamically display the content element according to the dragging operation, if the dragging operation to the content element is detected.

The content sharing unit 4034c is configured to share the content element in the target application, when detecting the content element is moved to an icon of a target application in the displayed icons of the applications.

The target application includes a communication application or a text editing application.

When implemented, the content sharing unit 4034c may include a first sharing sub unit 01, a second sharing sub unit 02 and a third sharing sub unit 03.

The first sharing sub unit 01 is configured to open the target application, when detecting the content element is moved to the icon of the target application in the displayed icons of the applications.

The second sharing sub unit 02 is configured to select a contact to share from the target application, and to share the content element to the contact, when the target application is the communication application.

The third sharing sub unit 03 is configured to insert the content element to a target editing page of the text editing application, when the target application is the text editing application.

In summary, in technical solutions of the present invention, the operation signal of the user for triggering content sharing is obtained in the currently displayed page, the content sharing mode is entered, the content element selected by the user from the currently displayed page is obtained, and the content element is shared. By the operation signal for triggering content sharing, triggering to enter the content sharing mode in the currently displayed page, the user may freely select and share the content element in the currently displayed page under the content sharing mode.

With respect to the device in the above embodiments, specific manners for respective modules performing operations have been described in detail in the related method embodiments and detailed descriptions thereof are omitted herein.

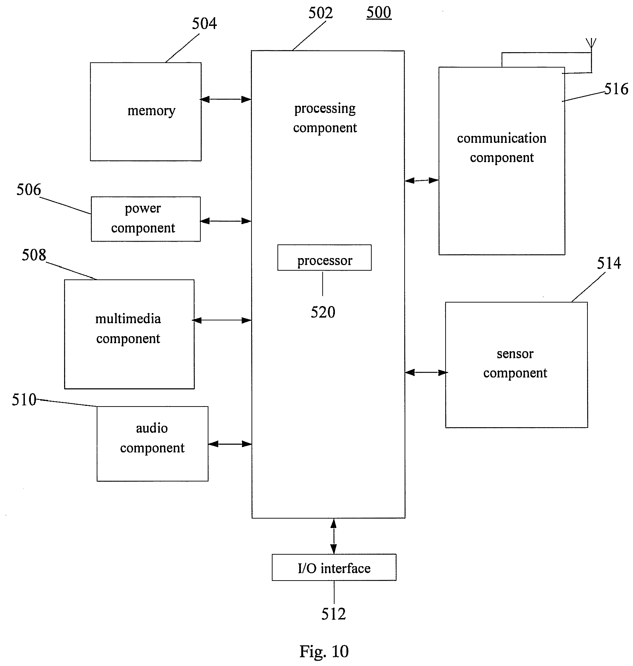

Refer to Fig. 10, showing a block diagram of a device 500 for sharing content according to an exemplary embodiment of the present invention. For example, the device 50 may be a mobile phone, a tablet computer or other electronic apparatus with a touch sreen.

Referring to Fig. 10, the device 500 may include the following one or more components: a processing component 502, a memory 504, a power component 506, a multimedia component 508, an audio component 510, an Input/Output (I/O) interface 512, a sensor component 514, and a communication component 516.

The processing component 502 typically controls overall operations of the electronic device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the electronic device 500. Examples of such data include instructions for any applications or methods operated on the electronic device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the electronic device 500. The power component 506 may include a power management system, one or more power sources, and any other components associated with the generation, management, and distribution of power in the electronic device 500.

The multimedia component 508 includes a screen providing an output interface between the electronic device 500 and the user, and the four corner of the screen are rounded. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 508 includes a front camera and/or a rear camera. The front camera and/or the rear camera may receive external multimedia data while the electronic device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the electronic device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface for the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the electronic device 500. For instance, the sensor component 514 may detect an open/closed status of the electronic device 500 and relative positioning of components (e.g. the display and the keypad of the electronic device 500. The sensor component 514 may also detect a change in position of the electronic device 500 or of a component in the electronic device 500, a presence or absence of user contact with the electronic device 500, an orientation or an acceleration/deceleration of the electronic device 500, and a change in temperature of the electronic device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate wired or wireless communication between the electronic device 500 and other devices. The electronic device 500 can access a wireless network based on a communication standard, such as WIFI, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 504 including instructions. The instructions may be performed by the processor 520 of the electronic device 500 so as to realize the method for generating information. For example, the non-transitory computer-readable storage medium may be a ROM, a RAM, a CD-ROM, a magnetic tape, a floppy disc, an optical data storage device, and the like.

A non-transitory computer readable storage medium is provided, when the instructions in the storage medium are performed by the processor of the device 500, the device 500 may execute the above method for sharing content.

It will be appreciated that the present invention is not limited to the exact construction that has been described above and illustrated in the accompanying drawings, and that various modifications and changes can be made without departing from the scope thereof.

## Claims

1. A method for sharing content, applied in an electronic apparatus and comprising:
displaying (101, 200) a content page specified to open by a user;
in the currently displayed page, obtaining (102) an operation signal of the user for triggering content sharing, and entering a content sharing mode; and
obtaining (103, 203) a content element selected by the user from the currently displayed page, and sharing the content element.

2. The method according to claim 1, wherein obtaining (102) an operation signal of the user for triggering content sharing and entering a content sharing mode comprises:
detecting (201) an operation gesture input by the user in the currently displayed page;
when the detected operation gesture is a preset operation gesture, obtaining (202) the operation signal of the user for triggering content sharing, and entering the content sharing mode, wherein
the preset operation gesture is an operation gesture for triggering the currently displayed page to be displayed as contracting inward from four corners of a display screen.

3. The method according to claim 1 or 2, wherein obtaining (103, 203) a content element selected by the user from the currently displayed page comprises:
extracting and highlighting the content element selected by the user from the currently displayed page;
or,
extracting and editing the content element selected by the user from the currently displayed page, and highlighting the edited content element.

4. The method according to any one of claims 1 to 3, wherein sharing (103, 203) the content element comprises:
displaying (204) icons of applications installed in the electronic apparatus for the user to share content; and
dragging (205) the content element to a displayed icon of an application to realize sharing the content element.

5. The method according to any one of claims 1 to 4, wherein the content element comprises at least one of text content, a picture, a link address, an audio and a video.

6. The method according to claim 4, wherein dragging (205) the content element to a displayed icon of an application to realize sharing the content element comprises:
detecting a dragging operation to the content element;
if the dragging operation to the content element is detected, dynamically displaying the content element according to the dragging operation;
when detecting the content element is moved to an icon of a target application in the displayed icons of the applications, sharing the content element in the target application, wherein the target application comprises a communication application or a text editing application.

7. The method according to claim 6, wherein when detecting the content element is moved to an icon of a target application in the displayed icons of the applications, sharing the content element in the target application comprises:
when detecting the content element is moved to the icon of the target application in the displayed icons of the applications, opening the target application;
when the target application is the communication application, selecting a contact to share from the target application, and sharing the content element to the contact;
when the target application is the text editing application, inserting the content element to a target editing page of the text editing application.

8. A device for sharing content, applied in an electronic apparatus and comprising:
a content displaying module (301, 401), configured to display a content page specified to open by a user;
a processing module (302, 402), configured to obtain an operation signal of the user for triggering content sharing in the currently displayed page, and to enter a content sharing mode; and
a content sharing module (303, 403), configured to obtain a content element selected by the user from the currently displayed page, and to share the content element.

9. The device according to claim 8, wherein the processing module (402) comprises:
a gesture detecting sub module (4021), configured to detect an operation gesture input by the user in the currently displayed page;
a mode switching sub module (4022), configured to obtain the operation signal of the user for triggering content sharing, and to enter the content sharing mode, when the detected operation gesture is a preset operation gesture, wherein the preset operation gesture is an operation gesture for triggering the currently displayed page to be displayed as contracting inward from four corners of a display screen.

10. The device according to claim 8 or 9, wherein the content sharing module (403) comprises:
a first processing sub module (4031), configured to extract and highlight the content element selected by the user from the currently displayed page;
or,
a second processing sub module (4032), configured to extract and edit the content element selected by the user from the currently displayed page, and to highlight the edited content element.

11. The device according to any one of claims 8 to 10, wherein the content sharing module (403) comprises:
an information displaying sub module (4033), configured to display icons of applications installed in the electronic apparatus for the user to share content; and
a content sharing sub module (4034), configured to drag the content element to a displayed icon of an application to realize sharing the content element.

12. The device according to any one of claims 8 to 11, wherein the content element comprises at least one of text content, a picture, a link address, an audio and a video.

13. The device according to claim 11, wherein the content sharing sub module (4034) comprises:
a detecting unit (4034a), configured to detect a dragging operation to the content element;
a controlling unit (4034b), configured to dynamically display the content element according to the dragging operation, if the dragging operation to the content element is detected;
a content sharing unit (4034c), configured to share the content element in the target application, when detecting the content element is moved to an icon of a target application in the displayed icons of the applications, wherein the target application comprises a communication application or a text editing application.

14. The device according to claim 13, wherein the content sharing unit (4034c) comprises:
a first sharing sub unit (01), configured to open the target application, when detecting the content element is moved to the icon of the target application in the displayed icons of the applications;
a second sharing sub unit (02), configured to select a contact to share from the target application, and to share the content element to the contact, when the target application is the communication application;
a third sharing sub unit (03), configured to insert the content element to a target editing page of the text editing application, when the target application is the text editing application.

15. A computer program including instructions for executing the steps of a method for sharing content according to any one of claims 1 to 7 when said program is executed by a computer.
